Europäisches Patentamt

European Patent Office

Office européen des brevets

(19)

(11) Numéro de publication : **0 121 030**
**B1**

(12) **FASCICULE DE BREVET EUROPÉEN**

(45) Date de publication du fascicule du brevet :
**11.11.87**

(51) Int. Cl.⁴ : **G 06 F 13/36**

(21) Numéro de dépôt : **83430012.1**

(22) Date de dépôt : **29.03.83**

(54) Dispositif d'arbitrage pour l'attribution d'une ressource commune à une unité sélectionnée d'un système de traitement de données.

(43) Date de publication de la demande :
**10.10.84 Bulletin 84/41**

(45) Mention de la délivrance du brevet :
**11.11.87 Bulletin 87/46**

(84) Etats contractants désignés :
**DE FR GB**

(56) Documents cités :
**EP-A- 0 038 189**
**EP-A- 0 039 635**
**WO-A-82 /024 40**
**US-A- 4 161 779**
**US-A- 4 320 467**
**THE 8TH ANNUAL SYMPOSIUM ON COMPUTER ARCHITECTURE, 12-14 mai 1981, Computer Society Press, NEW YORK (US) W.L. BAIN et al.: "Performance analysis of high-speed digital buses for multi-processing systems", pages 107-133**

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Giroir, Didier Villa "Le Mazet"**
**Domaine des Semboules Groupe des Genêts**
**F-06600 Antibes (FR)**
Inventeur : **Lacoste, Gérard**
**73, boulevard Edouard Herriot**
**F-06200 Nice (FR)**

(74) Mandataire : **Lattard, Nicole**
**Compagnie IBM France Département de Propriété Intellectuelle**
**F-06610 La Gaude (FR)**

Jouve, 18, rue St-Denis, 75001 Paris, France

**Description**

Domaine Technique

La présente invention concerne un dispositif d'arbitrage pour attribuer une ressource commune à une unité dans un système de traitement de données. Elle concerne plus particulièrement un dispositif d'arbitrage utilisables dans un système multiprocesseurs dans lequel plusieurs unités (processeurs, mémoires, adaptateurs d'entrée-sortie) sont reliées à un bus commun pour donner à une unité quelconque l'accès au bus.

Art Antérieur

Il existe de nombreux systèmes d'arbitrage pour affecter une ressource commune : bus ou mémoire dans un ensemble d'unités de traitement. L'article paru dans le « 8th Annual Symposium on Computer Architecture », le 12-14 Mai 1981, Computer Society Press, New York, US, aux pages 107-133, décrit les différentes techniques qui permettent d'arbitrer les demandes d'accès à une ressource commune. Une des techniques dite LRU (Least Recently Used) consiste à sélectionner la demande qui émane de l'unité qui n'a pas utilisé la ressource pendant l'intervalle de temps le plus long. Le brevet US 4 320 467 et la demande de brevet PCT publiée sous le n° WO 82/02440 décrivent un dispositif d'arbitrage pour déterminer lequel parmi une pluralité de dispositifs faisant une demande d'accès à un bus commun, sera sélectionné. Pour ce faire, le critère de sélection choisi est celui de la priorité du dispositif. A chaque dispositif est affectée une priorité fixe, et lorsque plusieurs dispositifs font une demande d'accès au bus, le mécanisme d'arbitrage sélectionne celui qui a la priorité la plus élevée. Il existe un autre type de système, tel que celui décrit dans le brevet US 4 313 161 dans lequel la ressource commune, par exemple la mémoire, est allouée à une unité sélectionnée. La sélection de l'unité est réalisée par un anneau de sélection centralisé en tenant compte de la dernière unité qui a été servie et de l'ordre de l'unité. Pour accélérer le processus de sélection, les unités ne faisant pas de demande ou faisant des demandes de faible priorité ne sont pas prises en compte dans l'anneau de sélection. Le dispositif décrit dans l'article paru dans l'IBM Technical Disclosure Bulletin Vol. 23, n° 5, Octobre 1980 pages 1801 à 1804 est du même type. Un inconvénient majeur de ces systèmes est qu'ils effectuent l'arbitrage uniquement en fonction de la priorité ou de l'ordre des unités.

Ils ne peuvent donc pas être utilisés dans un environnement multiprocesseurs, où chaque processeur doit avoir la même opportunité d'avoir accès à une ressource commune, par exemple le bus les reliant entre eux.

Résumé de l'invention

Un objet de l'invention est de réaliser un dispositif d'arbitrage décentralisé mettant en œuvre un procédé d'arbitrage dynamique du type LRU pour attribuer à une unité sélectionnée une ressource commune à plusieurs unités, qui soit simple et donne à chaque unité la même opportunité d'avoir une demande d'accès à la ressource servie.

La présente invention concerne un dispositif d'arbitrage destiné à un système de traitement de données dans lequel N unités partagent une ressource commune, pour attribuer au cours d'un cycle d'arbitrage, la ressource à l'une des unités demanderesses qui aura sa demande d'accès à la ressource, servie au cours du cycle suivant si la ressource est trouvée libre.

Une valeur âge initiale est attribuée à chaque unité, chaque valeur d'âge correspondant à l'âge de la demande qui sera faite par l'unité. Les demandes peuvent être affectées ou non d'un niveau de priorité. La demande sélectionnée au cours d'un cycle d'arbitrage étant celle dont l'âge correspond à la demande la plus ancienne parmi toutes les demandes ou parmi les demandes de niveau de priorité le plus élevé dans le cas où un niveau de priorité est affecté aux demandes. La valeur de l'âge de chaque unité est mise à jour une fois qu'une demande a été sélectionnée et que la ressource est trouvée libre. L'âge de l'unité sélectionnée prenant une valeur qui correspond à celle de la demande la plus récente, les âges des unités non sélectionnées qui correspondent à des demandes plus récentes que celles de l'unité sélectionnée étant augmentées d'une même quantité et les âges des unités non sélectionnées qui correspondent à des demandes plus anciennes que celle de l'unité sélectionnée restant inchangés.

Le dispositif d'arbitrage conforme à un mode de réalisation préféré de l'invention comprend un circuit d'arbitrage associé à chaque unité, ce circuit comportant un registre d'âge qui est chargé avec une valeur d'âge initial correspondant à l'adresse physique (0 à N-1) de l'unité associée, codée avec une valeur de groupe et une valeur de rang. La valeur de groupe a une valeur parmi $p$ valeurs de groupe distinctes et pour chaque valeur de groupe la valeur de rang a une valeur parmi $q$ valeurs de rang avec $p \times q = N$.

La sélection d'une demande comprend les étapes suivantes :

1) la sélection des demandes de niveau de priorité le plus élevé,

2) parmi les demandes ainsi sélectionnées, la sélection des demandes de groupe le plus élevé,

3) parmi les demandes ainsi sélectionnées la sélection de la demande de rang le plus élevé qui sera servie au cycle suivant si la ressource est trouvée libre.

## Brève description des figures

La figure 1 représente schématiquement l'organigramme des étapes du procédé de l'invention.

La figure 2 représente schématiquement le système dans lequel est mis en œuvre le procédé de l'invention.

La figure 3 représente le diagramme des temps des opérations réalisées au cours d'un cycle d'arbitrage.

La figure 4 représente un circuit d'arbitrage A-i associé à une unité U-i.

Les figures 5 A-D représentent l'organigramme des différentes opérations réalisées dans le circuit de la figure 4 au cours de chaque période d'horloge CL0-CL3.

Les figures 6A-6D représentent les circuits de sélection 32 et 33 et les circuits de comparaison 43 et 50 de la figure 4.

La figure 7 représente le circuit de contrôle de séquence 30 de la figure 4.

La figure 8 représente le circuit de mise à jour de l'âge 21 de la figure 4.

## Description détaillée de l'invention

Le dispositif de la présente invention est utilisable dans un système à plusieurs unités qui peuvent toutes être des unités maîtresses, pour allouer de façon dynamique une ressource commune à une des unités demanderesses. Dans un mode de réalisation qui sera décrit ultérieurement, la ressource commune est le bus qui relie toutes les unités.

Dans un tel système, chaque unité désirant avoir accès au bus pour réaliser une opération quelconque, fait une demande d'accès. Les demandes d'accès ont différents niveaux de priorité suivant le type d'opération à réaliser, par exemple les opérations en temps réel doivent avoir la priorité la plus élevée.

Pour sélectionner une demande d'accès au bus émanant d'une unité, deux critères d'arbitrage sont utilisés à savoir le niveau de priorité de la demande et son âge. A un instant donné, parmi toutes les demandes émanant des unités, la demande la plus ancienne parmi celles ayant le niveau de priorité le plus élevé est sélectionnée.

L'arbitrage est réalisé à chaque cycle d'accès au bus et ne dépend pas du type d'opération en cours de réalisation sur le bus, il est réalisé en même temps que les transferts d'adresses et de données ont lieu et ainsi le débit des informations n'est pas diminué par le processus d'arbitrage.

Un cycle entier est nécessaire pour déterminer quelle unité demandante sera susceptible d'être sélectionnée pendant le cycle suivant. L'attribution du bus à l'unité sélectionnée sera effective ou non suivant que l'unité qui avait accès au bus pendant le cycle a terminé son opération ou non. Si elle n'a pas terminé, la sélection n'est pas prise en considération et au cycle suivant le processus d'arbitrage prendra en considération toutes les demandes, y compris les anciennes demandes et les nouvelles.

Le processus d'arbitrage prend en compte plusieurs niveaux de priorité des demandes d'accès au bus.

Pour les demandes ayant la priorité la plus élevée, le processus d'arbitrage permet de sélectionner une seule unité qui pourra avoir accès au bus. Pour cela, une seule valeur appelée âge de la demande est prise en considération, pour sélectionner l'unité dont la demande est la plus ancienne.

Lorsque N unités peuvent être attachées au bus les demandes ont des âges dont les valeurs sont comprises entre 0 et N-1. A la restauration du système, l'âge des demandes de chaque unité est fixée à une valeur initiale déterminée. L'âge est ensuite mis à jour.

Après que les demandes de même niveau de priorité ont été déterminées, les unités faisant ces demandes placent l'âge des demandes sur un bus d'arbitrage, afin de déterminer la demande à sélectionner conformément à l'algorithme suivant.

Dans un niveau de priorité donné, l'algorithme donne à chaque unité la même opportunité d'avoir une demande d'accès au bus servie. Pour cela, plus la demande est vieille, plus tôt elle est servie. De plus, les unités qui n'ont pas fait de demandes d'accès au bus, gardent l'opportunité d'avoir leur demande servie tant qu'elles ne font pas de demande. Ce qui signifie qu'une unité ayant fait une demande d'accès au bus a priorité par rapport aux unités ayant utilisé le bus plus récemment.

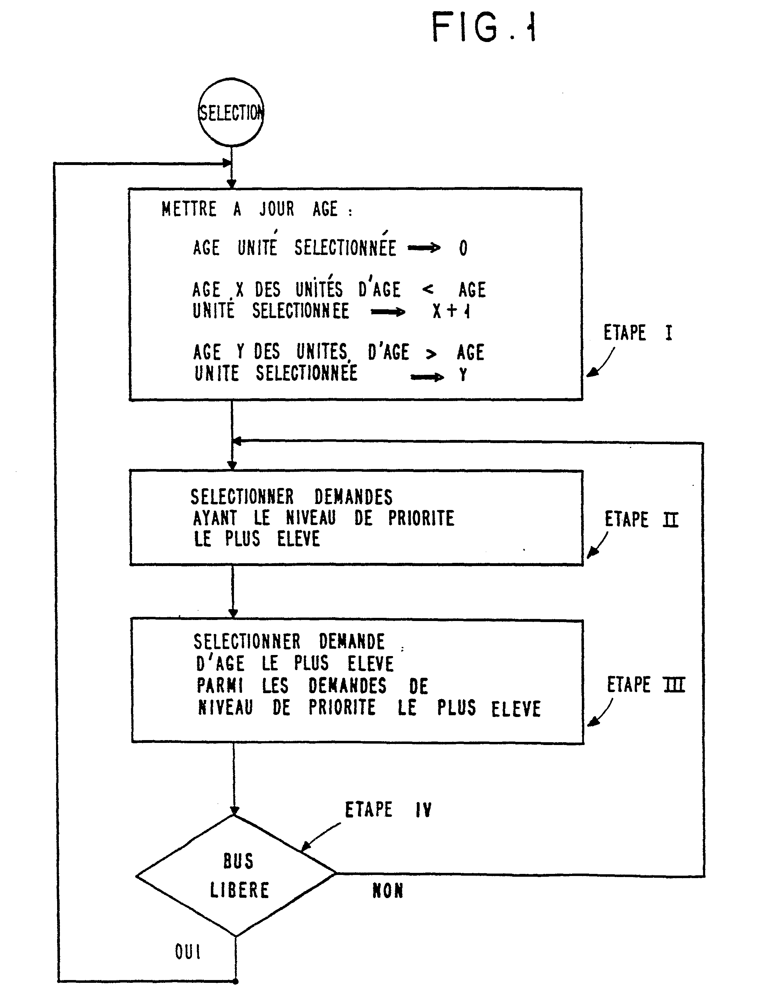

Les étapes du processus d'arbitrage sont décrites en référence à la figure 1.

## Etape I

Au début de chaque cycle, chaque unité demandante ou non met son âge à jour ; si au cours du cycle précédent, le bus a été attribué à une unité sélectionnée. Ceci signifie que l'unité qui utilisait le bus

3

pendant le cycle précédent l'a libéré et qu'une unité demandante a été sélectionnée pour avoir accès au bus pendant le cycle en cours.

La mise à jour est réalisée conformément aux règles suivantes :

L'unité sélectionnée prend un âge égal à 0.

Les autres unités incrémentent leurs âges de 1 uniquement si elles ont un âge inférieur à celui de l'unité sélectionnée,

autrement leur âge ne change pas.

Par exemple, si les unités ayant un âge de 2, 3 et 4 font des demandes d'accès au bus, alors que les unités d'âge 0, 1, 5 et 6 n'en font pas la demande, l'unité ayant l'âge 4 sera sélectionnée et les unités ayant les âges 0, 1, 2, 3, 5 et 6 prendront respectivement les nouveaux âges 1, 2, 3, 4, 5 et 6, et l'unité sélectionnée prendra l'âge 0.

Ensuite, à l'étape II le niveau de priorité des demandes est examiné pour sélectionner les demandes du niveau de priorité le plus élevé. A l'étape III, la demande émanant de l'unité ayant l'âge le plus élevé dans le niveau de priorité le plus élevé est sélectionnée.

A l'étape IV, l'état du bus est testé et si le bus est libéré, on passe au cycle suivant en reprenant les étapes I à IV.

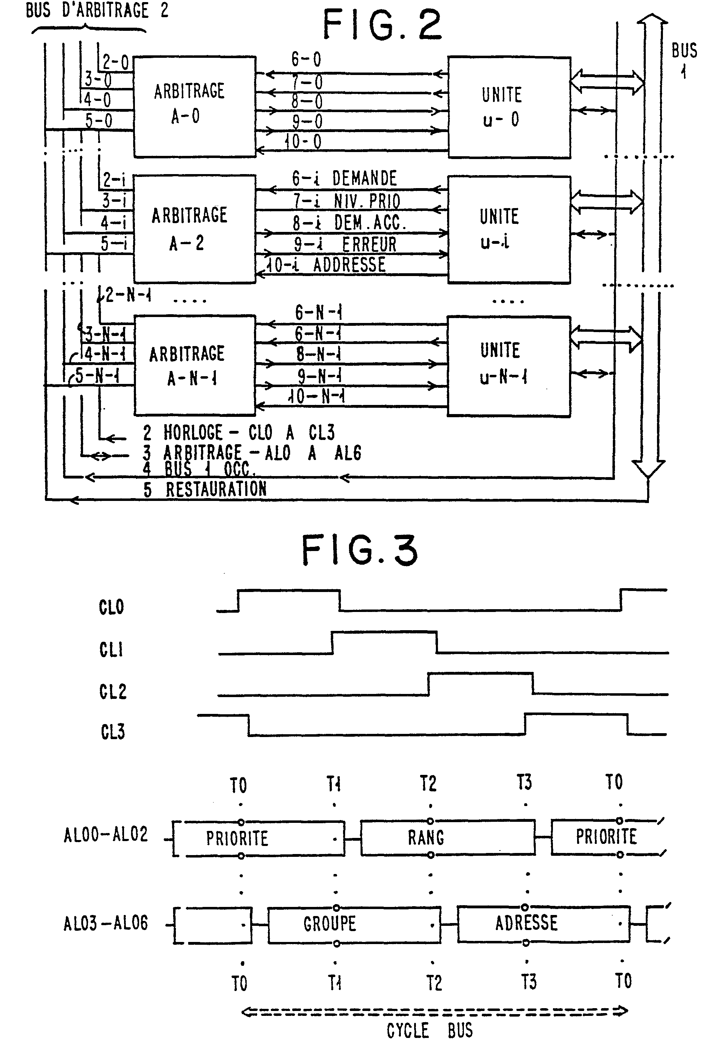

Si non, on passe au cycle suivant en reprenant les étapes II à IV. On va maintenant décrire comment le procédé d'arbitrage est mis en œuvre dans un système tel que représenté schématiquement sur la figure 2.

Les N unités U-0 à U N-1 (qui peuvent être des processeurs, des mémoires ou des adaptateurs d'entrée/sortie) peuvent avoir accès à un bus 1, par lequel elles communiquent entre elles, ou par lequel elles peuvent avoir accès à une ressource commune, par exemple une mémoire.

Dans la description, on utilise le terme fil pour dénommer l'élément constituant un bus et le terme ligne dans le cas d'une connexion ne faisant pas partie d'un des bus.

A chaque unité est associé un circuit d'arbitrage A-0 à A-N-1. Les circuits d'arbitrage A-0 à A-N-1 sont connectés à un bus d'arbitrage 2, qui comporte un certain nombre de fils : dans un mode de réalisation préféré, quatre fils 2 unidirectionnels sont affectés à la distribution des impulsions d'horloge CL0-CL3 (fig. 3) aux circuits d'arbitrage afin de contrôler la succession des opérations nécessaires à la réalisation de l'arbitrage d'une manière qui sera décrite ultérieurement.

Une ligne 4 reçoit des unités U-0 à U-N-1 l'information BUS 1 OCCUPE indiquant l'état du bus 1.

Une ligne 5 permet d'envoyer aux circuits A-0 à A-N-1 un signal de restauration. Les lignes sur lesquelles un circuit d'arbitrage quelconque A-i est connecté au bus 2 sont référencées par les mêmes numéros de référence 2 à 5 suivi du suffixe i affecté au circuit d'arbitrage. Chaque unité U-0 à U-N-1 est connectée à son circuit d'arbitrage A-0 à A-N-1 par trois lignes 6, 8, 9 et deux bus 10, 7.

Pour une unité et un circuit d'arbitrage quelconques U-i, A-i, les lignes sont les suivantes :

La ligne 6-i DEMANDE, amène au circuit d'arbitrage les demandes d'accès au bus ; signal DEMANDE actif signifie que l'unité fait une demande d'accès au bus.

Le bus 7-i NIVEAU DE PRIORITE amène au circuit d'arbitrage les bits du niveau de priorité de la demande codée sur trois bits : 001 niveau, 1, 010, niveau 2, 100 niveau 3, suivant un code binaire type 1 parmi n.

La ligne 8-i DEMANDE ACCORDEE permet au circuit d'arbitrage d'indiquer à l'unité que sa demande a été sélectionnée.

La ligne 9-i ERREUR est active lorsqu'une erreur a été détectée dans le processus d'arbitrage, pour la signaler à l'unité N-i.

Le bus 10-i ADRESSE permet chaque unité d'amener au circuit d'arbitrage les bits de l'adresse physique de l'unité.

Sept fils 3, bidirectionnels reçoivent des circuits A-0 à A-N-1 des bits d'information constituant les paramètres d'arbitrage à des instants appropriés, ces paramètres sont la priorité de la demande son âge, et une information de contrôle. Sept fils, correspondent dans un mode de réalisation préféré à une possibilité d'arbitrage avec seize unités faisant des demandes pouvant avoir trois niveaux de priorité. Ce nombre de fils peut être modifié pour adapter le circuit d'arbitrage à une autre configuration de système c'est-à-dire avec plus ou moins d'unités.

Un cycle d'accès au bus est divisé en quatre périodes qui sont définies par les impulsions d'horloge CL0 à CL3 comme représenté sur la fig. 3.

Afin de minimiser le nombre de fils du bus d'arbitrage, l'âge est défini avec deux valeurs, une première valeur appelée groupe choisie parmi p valeurs avec p = 4 dans l'exemple choisi et une seconde valeur appelée rang, choisi pour chaque groupe parmi q valeurs avec q = 4, p et q étant tels que p × q ≥ N. Ces deux valeurs sont codées de la façon suivante :

| AGE | GROUPE | RANG | CODAGE GROUPE | CODAGE | RANG |
|-----|--------|------|---------------|--------|------|
| 0 | GROUPE 0 | RANG 0 | 0 0 0 0 | | 0 0 0 |
| 1 | // | RANG 1 | 0 0 0 0 | | 0 0 1 |

(Suite)

| AGE | GROUPE | RANG | CODAGE GROUPE | CODAGE RANG |
|---|---|---|---|---|
| 2 | // | RANG 2 | 0 0 0 0 | 0 1 0 |
| 3 | // | RANG 3 | 0 0 0 0 | 1 0 0 |
| 4 | GROUPE 1 | RANG 0 | 0 0 0 1 | 0 0 0 |
| 5 | // | RANG 1 | 0 0 0 1 | 0 0 1 |
| 6 | // | RANG 2 | 0 0 0 1 | 0 1 0 |
| 7 | // | RANG 3 | 0 0 0 1 | 1 0 0 |
| 8 | GROUPE 2 | RANG 0 | 0 0 1 0 | 0 0 0 |
| 9 | // | RANG 1 | 0 0 1 0 | 0 0 1 |
| 10 | // | RANG 2 | 0 0 1 0 | 0 1 0 |
| 11 | // | RANG 3 | 0 0 1 0 | 1 0 0 |
| 12 | GROUPE 3 | RANG 0 | 0 1 0 0 | 0 0 0 |
| 13 | // | RANG 1 | 0 1 0 0 | 0 0 1 |
| 14 | // | RANG 2 | 0 1 0 0 | 0 1 0 |
| 15 | // | RANG 3 | 0 1 0 0 | 1 0 0 |

Les fils 3 AL0 à AL6 du bus d'arbitrage sont divisés en deux sous-ensembles de fils G1 et G2. G1 est formé des fils AL0 à AL2 qui reçoivent aux instants appropriés comme représenté sur la figure 3 les bits du niveau de priorité ou du rang. G2 est formé des fils AL3 à AL6 qui reçoivent aux instants appropriés définis sur la figure 3 les bits du groupe ou de l'adresse.

La séquence des opérations réalisée pour la sélection d'une demande d'accès est la suivante. Pour réaliser une opération d'arbitrage, un cycle d'accès au bus complet est nécessaire. Un cycle bus s'étend entre deux temps T0, définis par deux fronts montants de CL0. Le cycle d'arbitrage s'étend entre deux temps T3 consécutifs définis par les fronts montants de CL3.

Au temps T0, les niveaux de priorité (dont les bits avaient été placés sur les lignes AL0 à AL2 au temps T3 du cycle précédent) sont comparés. Pour cela, le circuit d'arbitrage de chaque unité compare les bits de son niveau de priorité avec ceux du niveau de priorité le plus élevé présent sur le bus d'arbitrage. En effet, tous les bits des différents niveaux de priorités sont sommés logiquement sur le bus d'arbitrage, et du fait du code utilisé 1 parmi n, la combinaison de bits résultante permet de déterminer le niveau le plus élevé. Si le niveau de priorité de la demande est trouvé égal au niveau le plus élevé, le circuit d'arbitrage place sur les fils AL3 à AL6, les bits de la valeur du groupe de l'âge de la demande. De plus, toutes les unités demandantes ou non testent une bascule dans laquelle avait été mémorisé au cycle précédent l'état du bus 1. Si cette bascule indique que le bus était libre le groupe et le rang sont mis à jour conformément à l'algorithme décrit précédemment. Dans le cas contraire aucun changement n'est fait puisque si le bus n'était pas libre, l'opération en cours n'est pas terminée et par conséquent une opération d'arbitrage doit redémarrer.

Au temps T1, pour toutes les unités restant en compétition après comparaison des priorités, les bits de leurs valeurs de groupe sont présents sur les fils AL3 à AL6, et une comparaison des valeurs est réalisée pour déterminer les demandes ayant la valeur de groupe la plus élevée. De la même façon que pour la comparaison des niveaux de priorité, chaque circuit d'arbitrage compare son groupe avec la valeur du groupe la plus élevée présente sur les fils AL3 à AL6. Toutes les unités demandantes ayant une valeur de groupe égale à la valeur la plus élevée, sont autorisées à mettre leurs bits de rang sur les lignes AL0 à AL2 à la place des bits du niveau de priorité. Simultanément toutes les unités suppriment les bits du niveau de priorité des fils AL0 et AL2 pour ne pas altérer la comparaison ultérieure des rangs.

Au temps T2, les bits des valeurs des rangs ayant été placés sur les fils AL0 à AL2 par les circuits d'arbitrage des unités demandantes restant en compétition après comparaison des groupes, une comparaison des rangs est réalisée de la même façon que pour les niveaux de priorité et les groupes. La valeur de rang la plus élevée présente sur les fils AL0 à AL2 est comparée avec la valeur des rangs de chaque demande. Après comparaison du rang, une seule requête doit normalement rester active. Cependant, afin d'avoir une protection contre les pannes possibles, une quatrième étape est exécutée pour vérification.

Les unités (en principe une seule) restant en compétition placent les bits de leurs adresses physiques sur les fils AL3 à AL6. Simultanément, toutes les unités demandantes retirent les bits de groupe.

Au temps T3, l'adresse physique sur les fils AL3 à AL6 est lue par les circuits d'arbitrage dans lesquels une égalité avait été détectée suite à la comparaison des rangs, et cette valeur est comparée à leurs adresses physiques propres. Dans l'hypothèse où plusieurs unités avaient été sélectionnées, les valeurs des bits d'adresses sur le bus auraient été altérées les unes par les autres et tous les circuits d'arbitrage sauf un au plus détecteront une erreur et enverront un signal sur leur ligne 9-i.

Il est donc assuré qu'à la fin de l'opération d'arbitrage il n'y aura qu'une demande susceptible d'être sélectionnée. Ensuite, tous les circuits d'arbitrage qu'ils aient eu leur demande sélectionnée ou non, font un test de l'état du bus, en testant la ligne 4 BUS 1 OCCUPE. Cet état est mémorisé dans une bascule, car il est utilisé au temps T0 suivant pour la mise à jour de l'âge. Si le test indique que le bus est libre, une seule unité U-i a été sélectionnée pour avoir accès au bus, le circuit d'arbitrage A-i active la ligne 8-i DEMANDE ACCORDEE, et l'unité peut avoir accès au bus au temps T0 suivant.

Si le test indique que le bus est occupé, aucune unité n'est sélectionnée ; le processus d'arbitrage recommence au cycle suivant. En conséquence, que le bus soit libre ou non tous les circuits d'arbitrage qui avaient mis des bits de rang sur les lignes AL0-AL2 les supprimeront, et toutes les unités qui à ce moment ont une demande d'accès au bus en attente (ligne 6 et bus 7 actives) placent le niveau de priorité sur les fils AL0-AL2. Un nouveau cycle d'arbitrage peut commencer.

Au démarrage, le cycle d'arbitrage commence suite à une commande de restauration sur le fil 5, qui provoque le chargement de l'âge initial égal à l'adresse physique des unités. Un cycle d'arbitrage se déroulera mais aucune unité ne sera sélectionnée puisque les bits de niveau de priorité ne seraient pas présents sur les fils AL0 à AL2. Le cycle d'arbitrage commencera au temps T0 suivant. La chronologie des différentes opérations est représentée sur la figure 3, de même que les impulsions d'horloge CL0 et CL3. Les informations priorité rang et groupe placées sur les fils AL0-AL6 sont représentées à chaque période.

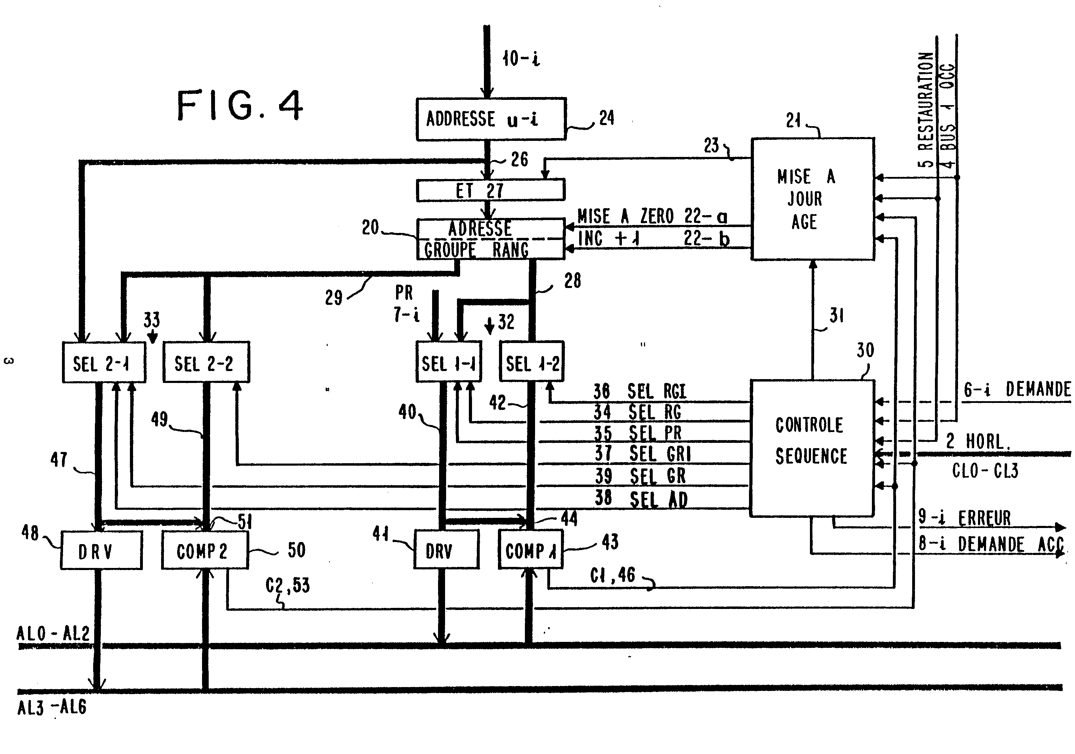

Chaque circuit d'arbitrage tel que A-i comporte les éléments représentés sur la figure 4. Un registre d'âge 20 reçoit initialement à la restauration du système les bits de l'adresse physique et stocke les bits de groupe et de rang conformément au tableau précédent, comme valeur d'âge initiale. Le chargement de l'adresse physique et la mise à jour de la valeur de l'âge sont contrôlés par un circuit de contrôle d'âge 21 qui génère deux lignes de sorties 22a et 22b MISE A ZERO et INC + 1.

Deux signaux de mise à jour de l'âge, le premier sur la ligne 22a contrôlant la mise à 0 de l'âge lorsque la demande est acceptée et le second sur la ligne 22b contrôlant l'incrémentation de l'âge, conformément à l'algorithme de mise à jour précédemment décrit. Le circuit 21 génère sur la ligne 23 le signal de chargement initial. Initialement, le registre est chargé avec l'adresse physique de l'unité U-i qui est associée au circuit A-i. Pour cela, l'adresse est stockée dans un registre d'adresse 24 qui est chargé par le bus d'adresse 10-i. Le contenu du registre 24 peut être transféré dans le registre d'âge 20 par le bus 26 sous contrôle du signal de chargement de l'adresse physique sur la ligne 23. Les bits des rangs et groupe sont fournis sur les bus de sortie 28 et 29 du registre 20, pour être utilisés pendant le processus de sélection d'une demande. Un circuit de contrôle de séquence des opérations qui sera décrit ultérieurement en référence aux figures 6A et 6B reçoit du bus d'arbitrage les signaux d'horloge CL0-CL3 sur les fils 2, le signal BUS 1 OCCUPE sur le fil 4 et le signal de restauration sur le fil 5. Il reçoit de l'unité U-i le signal de demande sur la ligne 6-i. Le circuit 30 génère des signaux de commande en fonction des signaux reçus pour permettre au processus d'arbitrage de se dérouler afin de pouvoir générer sur sa sortie 31 le signal de commande de mise à jour de l'âge et sur les lignes 9-i et 8-i allant à l'unité U-i les signaux ERREUR et DEMANDE ACCORDEE.

Le circuit d'arbitrage comprend en outre un premier sélecteur 32 formé de deux ensembles de sélection SEL 1-1 et SEL 1-2 et un second sélecteur 33 formé de deux ensembles de sélection SEL 2-1 et SEL 2-2. Ces sélecteurs 32 et 33 reçoivent du circuit 30 des signaux de sélection sur les lignes 34 à 39. Le circuit SEL 1-1 du sélecteur 32 fait passer sur son bus de sortie 40, aux instants appropriés définis par les signaux sur la ligne 34 SEL RG et sur la ligne 35 SEL-PR, soit les bits du rang fournis par le bus 28 soit les bits du niveau de priorité fournis par le bus 7-i.

Des circuits d'attaque 41, montés en collecteurs ouverts reçoivent en entrées les fils du bus 40 et appliquent les bits de rang ou de priorité du bus 40 aux fils AL0-AL2 du bus d'arbitrage.

Le circuit SEL 1-2 du sélecteur 32 laisse passer sous contrôle de la ligne SEL RGI, les bits de rang fournis par le bus 28, sur le bus 42. Ce signal est actif du temps T1 au temps T3.

Le comparateur 43 effectue la comparaison entre l'état des bits sur les fils AL0-AL2 et l'état sur son bus d'entrée 44 qui correspond à l'état des bits de rang ou de priorité sur le bus 40 ou l'état des bits de rang sur le bus 42.

Il fournit deux indications C1 sur sa sortie 46, la première indiquant une égalité entre l'état des bits sur le bus 44, et sur les fils AL0-AL2, la seconde indiquant que l'état des bits sur le bus 44 correspond à une valeur inférieure à l'état des bits sur les fils AL0-AL2.

Le circuit SEL 2-1 du sélecteur 33 fait passer sur son bus de sortie 47, aux instants appropriés définis par les signaux sur les lignes 38 SEL AD et 39 SEL GR, soit les bits de l'adresse sur le bus 26 soit les bits de groupe sur le bus 29. Des circuits d'attaque 48 montés en collecteurs ouverts reçoivent les fils du bus 47 et appliquent les bits de l'adresse ou du groupe aux bits AL3-AL6 lorsque le circuit SEL 2-1 33 est ouvert.

Le circuit SEL 2-2 du sélecteur 33 laisse passer sur son bus de sortie 49 sous contrôle du signal SEL GRI sur la ligne 37 les bits de groupe fournis sur le bus 29.

Le comparateur 50 reçoit d'une part les bits sur les fils AL3-AL6 et d'autre part les bits sur son bus d'entrée 51 qui sont constitués soit par les bits d'adresse ou de groupe fournis sur le bus 47 soit les bits de groupe sur le bus 49.

Le comparateur 50 fournit sur sa sortie 53 deux indications C2, l'une indiquant qu'il y a égalité entre l'état des bits sur le bus d'entrée 51 et l'état des bits sur les fils.

AL3-AL6, l'autre indiquant que l'état des bits sur le bus 51 correspond à une valeur inférieure à celle des bits sur les fils AL3-AL6.

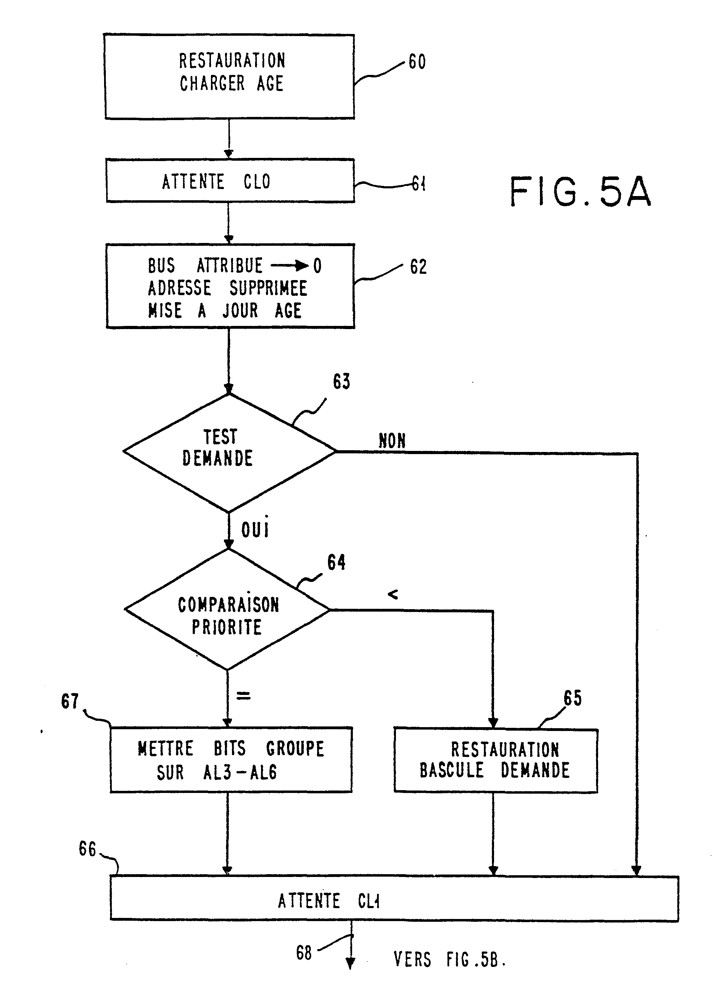

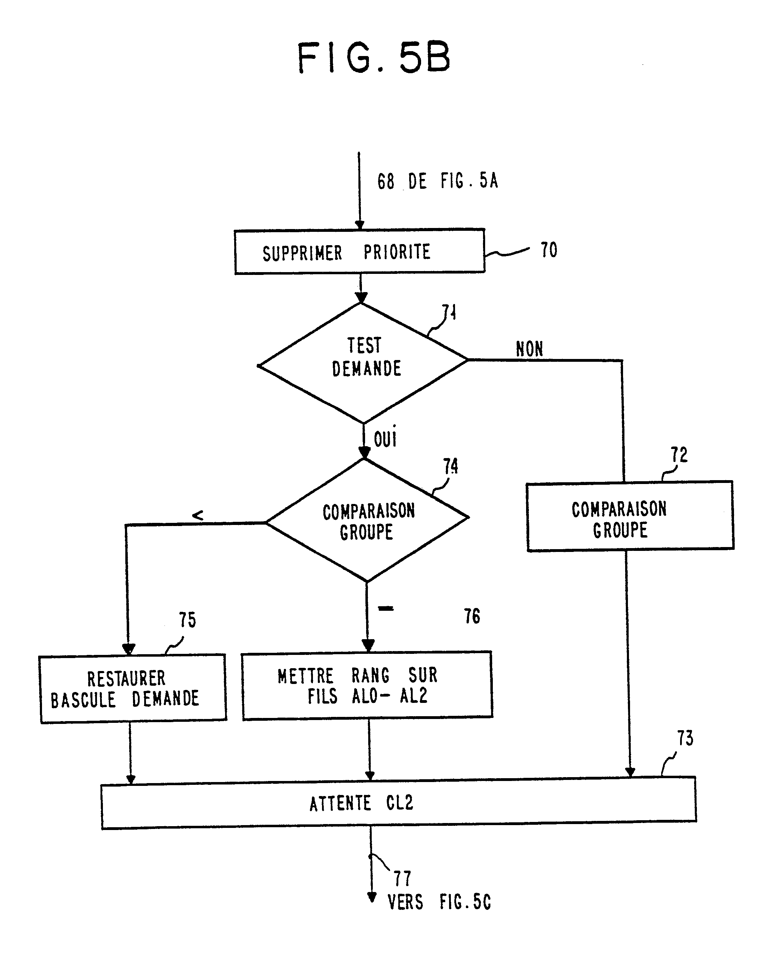

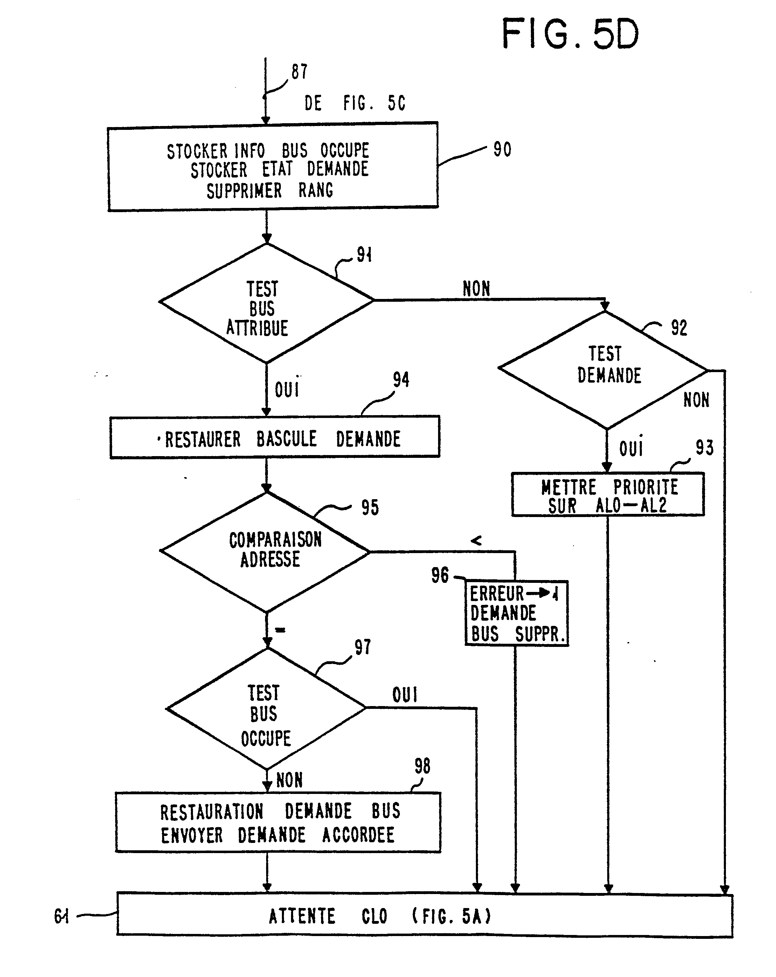

Le circuit de contrôle de séquence permet de réaliser à chaque cycle la séquence d'opérations suivantes schématisée sur les figures 5A à 5D.

Le processus d'arbitrage peut démarrer, suite à un signal de restauration ou suite à une opération d'arbitrage dans un cycle précédent.

A la réception d'un signal de restauration sur le fil 5, l'âge est chargé dans le registre 20 à partir du registre 24 (étape 60) puis la période active niveau haut du signal d'horloge CL0 est attendue (étape 61).

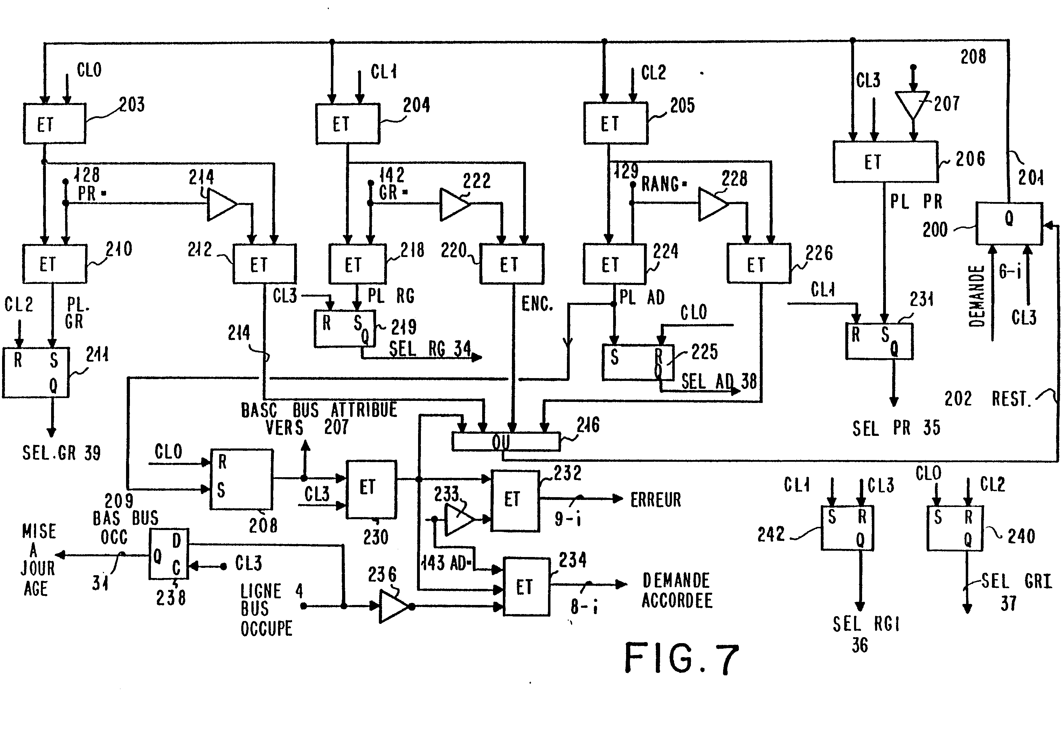

Lorsque CL0 passe au niveau haut, l'information BUS ATTRIBUE (fig. 7, bascule 208) est mise à zéro, cette information avait été générée lors du cycle d'arbitrage précédent. Le signal SEL AD sur la ligne 38 est au niveau bas pour supprimer l'adresse du bus de sortie 47 du sélecteur 33, et donc des fils AL3-AL6, et les paramètres d'arbitrage sont mis à jour (étape 62).

Un test est fait de l'état de la ligne DEMANDE 6-i (étape 63). Si cette ligne est inactive : pas de demande, la période active de CL1 est attendue (étape 66).

Si il y a une demande le comparateur COMP1 43 compare la valeur des bits sur les fils AL0 et AL2, qui correspond à la fonction OU de tous les bits de niveaux de priorité présentés sur le bus d'arbitrage et qui correspond donc à la valeur de priorité la plus élevée, de par l'utilisation du code choisi 1 parmi n, avec la valeur des bits du niveau de priorité de la demande sur le bus 40 (étape 64).

Si C1 indique une inégalité (bits sur 40, < bits AL0-AL2). La bascule de demande (200 sur fig. 7) est restaurée (étape 65) et le niveau haut de CL1 est attendu (étape 66).

Si C1 indique une égalité, le signal SELGR sur la ligne 39 ouvre le sélecteur 2-1 33 pour faire passer les bits de groupe afin que tous les circuits d'arbitrage restant en compétition placent leurs bits de groupe sur les fils AL3-AL6 (étape 67).

Le signal SEL GRI est actif pour amener les bits de groupe sur le bus 51 quel que soit le résultat de la comparaison.

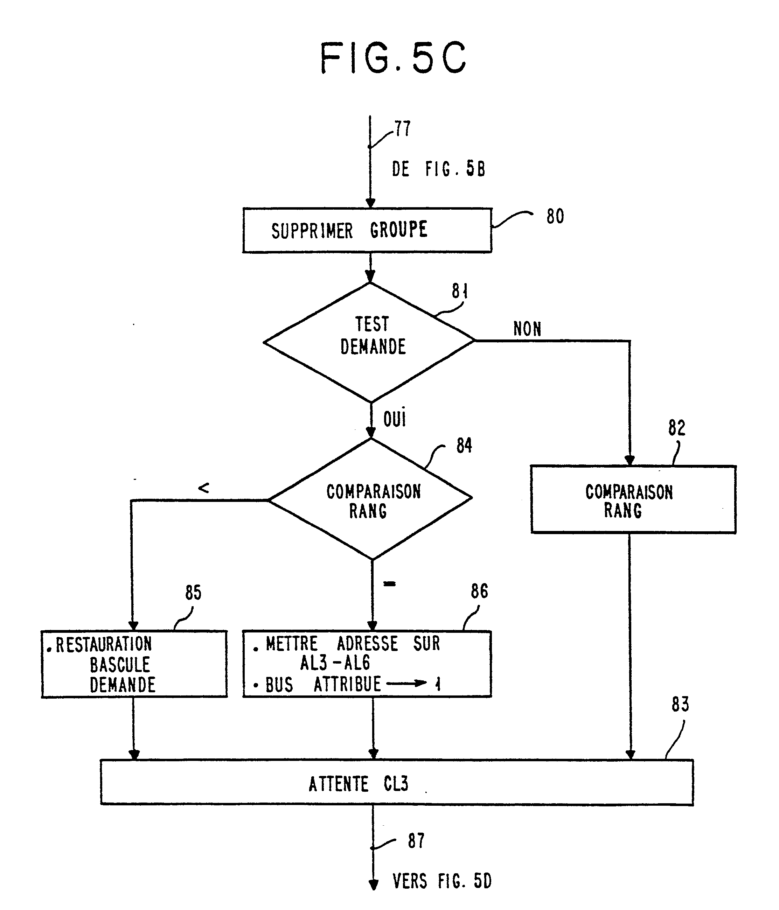

Lorsque CL1 passe au niveau haut (fig. 5B) le signal SEL PR sur la ligne 35 devient inactif pour fermer le sélecteur SEL 1-1 32 pour supprimer les bits de priorité du bus 40 et donc des fils AL0-AL2 (étape 70). La bascule de demande est testée (étape 71). Si aucune demande n'est présente, les valeurs des bits de groupe sur les fils AL3-AL6 et des bits de groupe sur les fils du bus 49 sont comparés dans le comparateur COMP2 50 (étape 72) de la même façon que pour les bits de priorité, les bits sur les fils AL3-AL6 représentent le groupe le plus élevé. Ensuite on attend la période active de CL2 (étape 73).

Si une demande est présente, les bits de groupe sur le bus 51 et ceux sur les fils AL3-AL6 sont comparés de la même façon que précédemment.

Si les bits sur les fils du bus 51 sont inférieurs à ceux sur les fils AL3-AL6, la bascule de demande est restaurée (étape 75) et la période active de CL2 est attendue.

Si une égalité est détectée, les bits du rang sont placés par le sélecteur SEL 1-1 32 sur le bus 40 ouvert par le signal SEL RG sur la ligne 34 et ils sont mis sur les fils AL0-AL2 par les circuits d'attaque 41 (étape 76), et la période active de CL2 est attendue (étape 73).

Le signal SEL RGI sur la ligne 35 est rendu actif pour ouvrir le sélecteur SEL 1-2 32, afin de faire passer les bits de rang sur le bus 42 et pouvoir les appliquer sur le bus d'entrée 44 du comparateur 43 qu'il y ait une demande ou non.

La période active de CL2 est attendue (étape 73).

Lorsque CL2 passe un niveau haut (fig. 5C), le signal SEL GRI sur la ligne 37 est désactivé pour fermer le sélecteur SEL 2-2 33 afin de supprimer les bits internes du groupe du bus 49.

Le circuit SEL 2-1 33 est fermé en désactivant le signal SEL GR sur la ligne 39 pour supprimer les bits de groupe des fils AL3-AL6 (étape 80). La bascule de demande est testée (étape 81).

Si aucune demande n'est présente, les bits de rang sur les fils AL0-AL2 et les bits de rang sur le bus 42 sont comparés par le comparateur COMP1 43 (étape 82). Les bits de rang sur les fils AL0-AL2 correspondent à la fonction OU des bits de rang de toutes les demandes des unités restant en compétition et indiquent dont la valeur de rang la plus élevée. Le niveau haut de CL3 est attendu (étape 83).

Si une demande est présente, les bits de rang sur le bus 44 et sur les fils AL0-AL2 sont comparés de la même façon que précédemment dans le comparateur 43.

Si il y a une inégalité : (bits sur 44 < bits sur AL0-AL2), la bascule de demande est restaurée (étape 85) et le niveau haut de CL3 est attendu (étape 83).

Si il y a égalité le sélecteur 2-1 33 est ouvert par le signal SEL AD sur la ligne 38 pour faire passer le contenu du bus 26 sur le bus 47 et mettre les bits d'adresse sur les fils AL3-AL6, et la bascule BUS ATTRIBUE est mise à 1 (étape 86). Le niveau haut de CL3 est attendu (étape 83).

Lorsque CL3 passe au niveau haut (fig. 5D) le signal SEL RGI sur la ligne 35 devient inactif et le sélecteur SEL 1-2 32 est fermé pour supprimer ces bits de rang du bus 42.

L'état du fil 4 BUS 1 OCCUPE est stocké dans une bascule BUS OCCUPE (238 fig. 7). L'état de la ligne de DEMANDE 6-i est stocké dans une bascule DEMANDE BUS (200 fig. 7).

Les bits de rang sont supprimés des fils AL0-AL2 en mettant au niveau bas le signal SEL RG 34 fermant ainsi le sélecteur SEL 1-1 32. (étape 90).

L'état de la bascule « BUS ATTRIBUE » est testé (étape 91) (bascule 208, fig. 7).

Si cette bascule est à 0 indiquant que le bus n'a pas été attribué la bascule de demande est testée (étape 92). Si il n'y a pas de demande, le niveau haut de CL0 est attendu (étape 61, fig. 5A). Si il y a une demande, les bits de priorité sont placés sur les fils AL0-AL2, par le sélecteur SEL 1-1 ouvert par le signal SEL PR sur la ligne 35 (étape 93) et le système se met en attente du niveau haut de CL0 pour recommencer une nouvelle opération d'arbitrage.

Si la bascule BUS ATTRIBUE est à 1, la bascule de demande (200 fig. 7) est restaurée (étape 94) et une comparaison de l'adresse physique est réalisée par le comparateur COMP-250 (étape 91). Si il n'y a pas d'égalité des bits d'adresse sur les fils AL3-AL6 et de l'adresse propre de l'unité associée au circuit d'arbitrage, (étape 96), la ligne ERREUR 9 i est mise au niveau haut et la DEMANDE DE BUS est supprimée, l'état de la ligne ERREUR est stocké.

Si il y a égalité, l'état de la ligne BUS 1 OCC est testé (étape 97). Si le bus est trouvé occupé, le système attend le niveau haut de CL0 (étape 61). Si le bus est trouvé libre la DEMANDE DE BUS est supprimée et la ligne DEMANDE ACCORDEE est mise à un état indiquant que la demande est sélectionnée (étape 98) et le système attend le niveau haut de CL0. Au cycle suivant cette unité ne participera pas au cycle de sélection et sa demande sera servie.

On va maintenant décrire en référence aux figures 6A à 6D et 7 et 8, les éléments logiques essentiels pour la mise en œuvre du procédé de la présente invention. Les sélecteurs 32 et 33 sont représentés schématiquement sur les figures 6A et 6B.

Le circuit SEL 1-1 du sélecteur 32 comporte des portes ET 100 et 102 et des portes OU 104. Les portes ET 100 reçoivent en entrées les bits du bus de priorité PR 7-i et le signal SEI PR sur la ligne 35. Les portes ET 102 reçoivent en entrées les bits de rang du bus 28 et le signal SEL RG sur la ligne 34. Les sorties des portes ET 100 et 102 sont appliquées aux entrées des portes OU 104, qui fournissent en sorties sur le bus 40 les bits de priorité ou de rang, suivant lequel des signaux SEL PR ou SEL RG est au niveau haut.

Le circuit SEL 1-2 du sélecteur 32 comporte des portes ET 103 qui reçoivent en entrées les bits de rang du bus 28 et le signal de commande d'ouverture SEL RGI sur la ligne 36. Quand ce signal est au niveau haut, elles fournissent sur le bus 42 les bits de rang.

Le circuit SEL 2-1 du sélecteur 33 comporte des portes ET 105 et 107 et des portes OU 109. Les portes ET 105 reçoivent en entrées les bits du bus d'adresse 26 et le signal SEL AD sur la ligne 38. Les portes ET 107 reçoivent en entrées les bits de groupe du bus 29 et le signal SEL GR sur la ligne 39.

Les sorties des portes ET 105 et 107 sont appliquées aux entrées des portes OU 109 qui fournissent en sorties sur le bus 47 les bits d'adresse ou de rang suivant lequel des signaux SEL AD ou SEL RG est au niveau haut.

Le circuit SEL 2-2 du sélecteur 33 comporte des portes ET 108 qui reçoivent en entrées les bits de groupe du bus 29 et le signal de commande SEL GRI sur la ligne 37. Quand ce signal est au niveau haut, elles fournissent sur le bus 49 les bits de groupe.

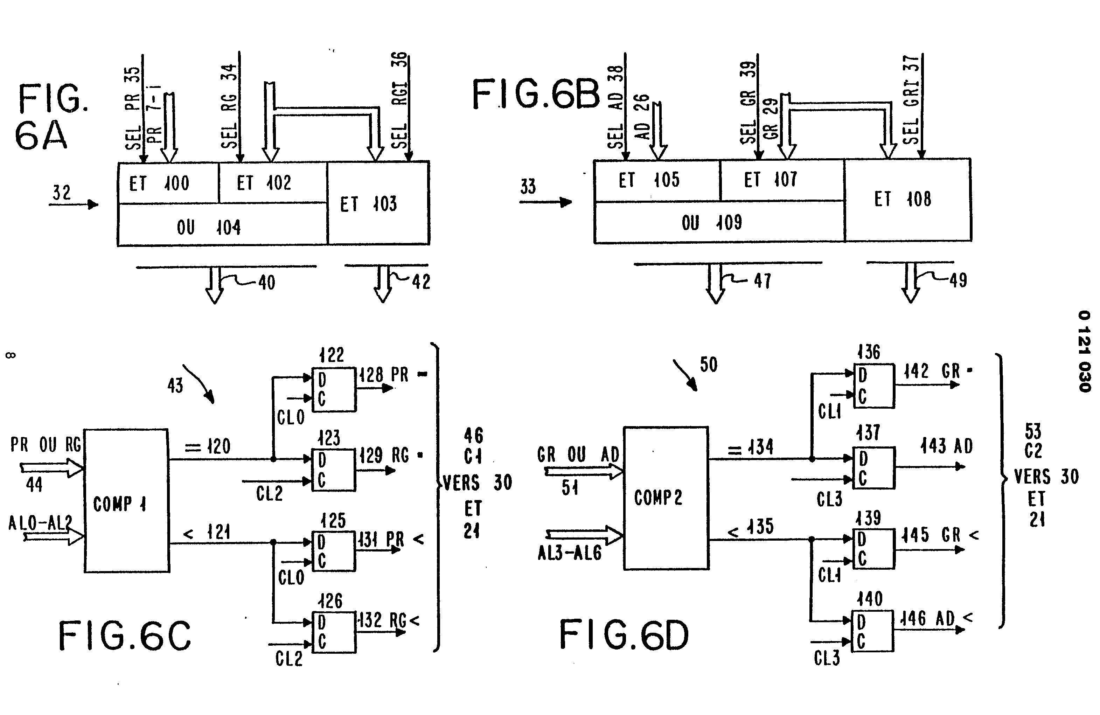

Le comparateur COMP P1, du circuit 43 représenté sur la figure 6C reçoit les bits du bus 44 et ceux sur les fils AL0-AL2. Ils génèrent deux indications : = sur sa sortie 120 et < sur sa sortie 121. Le niveau sur la sortie = est haut lorsque les bits sur le bus 44 et ceux sur les fils AL0-AL2 sont égaux et le niveau sur la sortie < est haut lorsque les bits sur le bus 44 correspondent à une valeur inférieure à celle des bits sur les fils AL0-AL2.

Les résultats de la comparaison sont stockés dans des bascules type D, 122, 123, 125, 126 aux instants appropriés.

La bascule 122 D, stocke le résultat de la comparaison sur la ligne 120 à l'instant CL0. Sa sortie 128 PR = au niveau haut signifie qu'une égalité a été trouvée entre les bits de priorité. La bascule 123 stocke le résultat de la comparaison sur la ligne 120 à l'instant CL2. Sa sortie 129 RG = au niveau haut signifie qu'une égalité a été trouvée entre les bits de rang.

La bascule 125 stocke l'état de la ligne 121 à l'instant CL0, sa sortie 131 < au niveau haut indique que les bits de priorité sur le bus 44 correspondent à une valeur inférieure à celle sur les fils AL0-AL2. La bascule 126 stocke l'état de la ligne 121 à l'instant CL2, sa sortie 132 RG < au niveau haut indique que les bits de rang sur le bus 44 correspondent à une valeur inférieure à celle sur les fils AL0-AL2.

Les sorties 128, 129, 131 et 132 fournissent l'information C1 envoyée par la ligne 46 (comprenant 4 fils) représentée sur la figure 4, aux circuits de contrôle de séquence et d'âge 30 et 21.

Le comparateur COMP P2 du circuit 50 représenté sur la figure 6D reçoit les bits du bus 51 et ceux sur les fils AL3-AL6 et génère deux indications : = sur sa sortie 134 et < sur sa sortie 135, qui ont la même signification que précédemment.

Le niveau du signal sur la sortie = 134 est au niveau haut lorsqu'il y a égalité des bits d'entrée du comparateur et la sortie < 135 est au niveau haut lorsque les bits sur les fils AL3-AL6 correspondent à une valeur inférieure à celle des bits sur le bus 51.

L'état de ces sorties est mémorisé dans quatre bascules type D, 136, 137, 139, 140. La bascule 136 mémorise l'état de la sortie 134 au temps CL1 sa sortie 142 GR = au niveau haut signifie qu'une égalité a été détectée entre les bits de groupe. La bascule 137 mémorise l'état de la sortie 134 au temps CL3, sa sortie 143 AD = au niveau haut signifie qu'une égalité a été détectée entre les bits d'adresse.

La bascule 139 mémorise l'état de la sortie 135 au temps CL1 sa sortie 145 GR < au niveau haut signifie qu'une inégalité a été détectée entre les bits de groupe. La bascule 140 mémorise l'état de la sortie 135 au temps CL3, sa sortie 146 AD < au niveau haut signifie qu'une inégalité a été détectée entre les bits d'adresse.

Les sorties 142, 143, 145 et 146 fournissent l'information C2 envoyée sur la ligne 49 (comprenant 4 fils) aux circuits de contrôle de séquence et d'âge 30 et 21.

Sur la figure 7 est représenté schématiquement le circuit de contrôle de séquence 30.

Il comprend une bascule de demande 200 de type D qui mémorise l'état de la ligne DEMANDE 6-i au temps CL3 et qui peut être restaurée (sortie 201 au niveau bas) par un signal sur son entrée de restauration 202 : la sortie 201 de la bascule de demande 200 est appliquée à une des entrées de quatre portes ET 203, 204, 205 et 206 qui sont ouvertes par les signaux d'horloge CL0, CL1, CL2 et CL3. La porte 206 est ouverte lorsque la condition supplémentaire : BUS ATTRIBUE = 0 est remplie. En conséquence, une entrée de la porte ET 206 est connectée à la sortie de la bascule BUS ATTRIBUE 208, inversée par l'inverseur 207.

La sortie de la porte ET 203 est appliquée à une entrée d'une porte ET 210, dont l'autre entrée est connectée à la sortie 128 PR = de la bascule 122 (fig. 6C). La porte 210 fournit sur sa sortie le signal PL GR contrôlant l'application des bits de groupe sur les fils AL3-AL6. Ce signal est appliqué à l'entrée d'enclenchement S d'une bascule 211 qui fournit sur sa sortie Q le signal SEL GR, sur la ligne 39. Cette bascule est restaurée par CL2 pour supprimer les bits de groupe des fils AL3-AL6 au temps CL2.

Une porte ET 212 reçoit sur une de ses entrées la sortie de la porte ET 203 et sur son autre entrée la sortie 128 PR = inversée par l'inverseur 214. Elle fournit sur sa sortie 214 un signal de restauration de la bascule de demande 200.

Ce signal est appliqué à une entrée d'une porte OU 216, dont la sortie est connectée à l'entrée RESTAURATION 202 de la bascule 200.

La sortie de la porte ET 204 est connectée à une entrée d'une porte ET 218 dont l'autre entrée est connectée à la sortie 142 GR = de la bascule 136. Cette porte 218 fournit sur sa sortie le signal PL RG contrôlant l'application des bits de rang aux fils AL0-AL2. Ce signal est appliqué à l'entrée d'enclenchement S d'une bascule 219 dont la sortie Q fournit sur la ligne 34 le signal de sélection de rang SEL RG. Cette bascule est restaurée au temps CL3 pour supprimer les bits de rang des fils AL0-AL2.

Une porte ET 220 a une entrée qui est connectée à la sortie de la porte ET 204 et une autre entrée qui est connectée à la sortie 142 GR = par un inverseur 222. La sortie de la porte ET 220 est connectée à une entrée du circuit OU 216 pour contrôler la restauration de la bascule 200 dans certaines conditions.

La sortie de la porte ET 205 est connectée à une entrée d'une porte ET 224 dont l'autre entrée est connectée à la sortie 129 RG = de la bascule 123. La porte ET 226 a une entrée qui est connectée à la sortie de la porte ET 205 et une autre entrée qui est connectée à la sortie 129 RG = par un inverseur 228. La sortie de la porte ET 224 fournit le signal PL AD contrôlant l'application des bits d'adresse sur les fils AL3-AL6. Ce signal est appliqué à l'entrée d'enclenchement S d'une bascule 225 dont la sortie fournit sur la ligne 38 le signal SEL AD. Cette bascule est restaurée au temps CL0 pour supprimer les bits d'adresse des fils AL3-AL6.

La sortie de la porte ET 224 est aussi connectée à l'entrée d'enclenchement 209 de la bascule BUS ATTRIBUE 208.

La sortie de la porte ET 226 est connectée à une entrée du circuit OU 216 pour contrôler la restauration de la bascule de demande dans certaines conditions.

La sortie de la porte ET 206 fournit le signal PL PR contrôlant l'application des bits de priorité sur les fils AL0-AL2. Ce signal est appliqué à l'entrée d'enclenchement d'une bascule 231 dont la sortie fournit sur la ligne 35 le signal SEL PR. Cette bascule est restaurée au temps CL1 pour supprimer les bits de priorité des fils AL0-AL2.

La bascule BUS ATTRIBUE 208 est une bascule du type RS elle est restaurée par le signal CL0 sur une entrée R.

La sortie de la bascule 208 est appliquée à une entrée d'une porte ET 230 ouverte par le signal CL3 appliqué sur son autre entrée. La sortie de la porte ET 230 est appliquée à une entrée de la porte OU 216.

La porte ET 232, a une entrée connectée à la sortie de la porte ET 230 et son autre entrée connectée à la sortie 143 AD de la bascule 140 inversée par l'inverseur 233 pour fournir sur sa sortie 9-1 le signal d'ERREUR.

La porte ET 234 a une entrée connectée à la sortie 143 AD = de la bascule 143, une autre entrée est connectée à la sortie de la porte 230 et une autre entrée connectée à la sortie de l'inverseur 236. L'inverseur 236 a son entrée connectée à la ligne 4 BUS OCCUPE. La porte 234 fournit sur sa sortie 8-i le signal DEMANDE ACCORDEE qui lorsqu'il est à un niveau haut permet à l'unité associée au circuit d'arbitrage d'avoir accès au bus.

La bascule 238 type D mémorise au temps CL3 l'état de la ligne pour fournir le signal de commande de mise à jour de l'âge sur la ligne 31.

Une bascule 240 enclenchée par CL0 et restaurée par CL2 fournit sur sa sortie Q le signal SEL GRI sur la ligne 37.

Une bascule 242 enclenchée par CL1 et restaurée par CL3 fournit sur sa sortie Q le signal SEL RGI sur la ligne 36.

Le circuit de la figure 7 permet de réaliser les opérations décrites dans l'organigramme des figures 5A et 5D.

Au moment où CL0 passe au niveau haut la porte ET 203 est ouverte. La bascule 240 est enclenchée et le signal SEL GRI devient actif sur la ligne 37 et ouvre les portes 107 (fig. 6B) faisant passer les bits de groupe sur le bus 49. La bascule 225 est restaurée le signal SEL A0 sur la ligne 38 ferme les portes ET 105 (fig. 6B) les bits d'adresse sont supprimés des fils AL3-AL6. La bascule BUS ATTRIBUE est restaurée.

Le comparateur 43 effectue la comparaison des bits de priorités qui avait été placé sur le bus 40 au temps CL3 du cycle précédent avec ceux sur les fils AL0-AL2. Si il y a égalité, la porte ET 210 est ouverte. Si il y a une demande d'accès au bus sur la ligne 6-i, la bascule 200 est enclenchée la porte ET 210 fournit un niveau de sortie haut et le signal de sélection de groupe SEL GR sur la ligne 39 est au niveau haut. Les portes ET 107 (fig. 6B) sont ouvertes et les bits de groupes passent sur le bus 47 et sur les fils AL3-AL6.

Si il n'y a pas égalité, la porte ET 212 fournit un signal de sortie au niveau haut qui est appliqué à l'entrée de restauration 202 de la bascule 200.

Au temps CL1, la bascule 231 est restaurée. Le signal SEL PR sur la ligne 35 est au niveau bas fermant les portes 100 et supprimant les bits de priorité des fils AL0-AL2. La bascule 242 est enclenchée le signal SEL RGI sur la ligne 36 est au niveau haut ouvrant les portes ET 103, ce qui fait passer les bits de rang sur les fils du bus 42.

Si la bascule de demande 200 n'a pas été restaurée au temps précédent, c'est-à-dire si il y avait égalité des priorités, la porte ET 204 fournit un signal de sortie au niveau haut.

La comparaison des bits de groupe a lieu dans le comparateur COMP 2 50, de tous les circuits d'arbitrage.

Si il y a égalité, le signal de sortie SEL RG sur la ligne 34 est au niveau haut pour faire passer les bits de rang sur les fils AL0-AL2, les portes ET 102 (fig. 6A) étant ouvertes.

Si il n'y a pas égalité, la porte ET 220 fournit un signal de sortie au niveau haut pour restaurer la bascule de demande 200.

Si la bascule de demande avait été restaurée au temps précédent CL0, la porte ET 204 aurait été fermée et le signal de sélection de rang SEL RG serait au niveau bas. Les portes ET 102 (fig. 6A) seraient fermées. Donc les bits de rang dans ces circuits d'arbitrage ne sont pas pré-appliqués aux fils AL0-AL2.

Au temps CL2, la bascule 240 est restaurée, le signal SEL GRI sur la ligne 37 ferme les portes ET 103. Les bits de groupe sont supprimés des fils AL3-AL6 car les portes ET 107 sont fermées, du fait que la bascule 211 est restaurée et le signal SEL GR sur la ligne 39 est au niveau bas.

Une comparaison des bits de rang est effectuée par le comparateur COMP 43 qui reçoit les bits de rang du bus 44 et les bits de rang le plus élevé sur les fils AL0-AL2.

Si il y a égalité et que la bascule 200 n'a pas été restaurée au temps précédent, la porte ET 205 est ouverte et la porte ET 224 fournit un signal de sortie au niveau haut qui est actif pour enclencher la bascule 225 et mettre le signal SEL AD sur la ligne 38 au niveau haut, ce qui ouvre les portes ET 105. Les bits d'adresse sont placés par le bus 47 et les circuits d'attaque 48 sur les fils AL3-AL6.

Le signal de sortie de la porte ET 224 enclenche la bascule BUS ATTRIBUE 208.

Si il n'y a pas égalité et que la bascule 200 n'a pas été restaurée au temps précédent, la porte ET 205 est ouverte et la porte ET 226 fournit un signal de sortie au niveau haut qui provoque la restauration de la bascule de demande 200.

Si la bascule de demande avait été restaurée, la porte ET 205 est fermée ainsi que la porte ET 224, le signal SEL AD sur la ligne 38 serait au niveau bas les bits d'adresse de cette unité ne seraient pas placés sur le bus et la bascule BUS ATTRIBUE ne serait pas enclenchée.

Au temps CL3, la bascule 242 est restaurée, le signal SEL RGI sur la ligne 36 est au niveau bas fermant les portes ET 103. La bascule 219 est restaurée, le signal SEL RG sur la ligne 34 est au niveau bas fermant les portes ET 102. Les bits de rang sont donc supprimés des fils AL0-AL2 et de l'entrée 44 du comparateur 43. L'état du bus est stocké dans la bascule 238.

Si la bascule BUS ATTRIBUE 208 avait été mise à 1 au temps précédent, la porte ET 206 est fermée et le signal SEL PR sur la ligne 35 est au niveau bas, les portes ET 100 sont fermées les bits de priorité ne sont pas mis sur les fils AL0-AL2, l'unité ne participe pas à la sélection au temps suivant puisque dans cette hypothèse la demande sélectionnée sera servie au cycle suivant et il n'y a pas de demande qui puisse être prise en compte.

La porte ET 230 fournit un signal de sortie au niveau 1 qui restaure la bascule de demande 200.

La comparaison des adresses est effectuée si il y a égalité et que le bus n'est pas occupé (ligne 4 à 0) la porte ET 234 fournit un signal au niveau haut sur la ligne 8-i DEMANDE ACCORDEE. Si le bus est occupé, la porte ET 234 est fermée et le signal sur la ligne 8-i est au niveau bas signifiant que la demande ne peut être sélectionnée.

Si il y a inégalité des bits d'adresse la porte ET 232 fournit un signal de sortie au niveau haut sur la ligne 9-i ERREUR.

Si le bus n'a pas été attribué, et qu'une demande est mémorisée dans la bascule 200, la porte ET 206 fournit un signal de sortie au niveau haut sur la ligne SEL PR 35 qui ouvre les portes ET 100 pour faire passer les bits de priorité sur le bus 40 et donc sur les fils AL0-AL2.

Un nouveau cycle peut commencer.

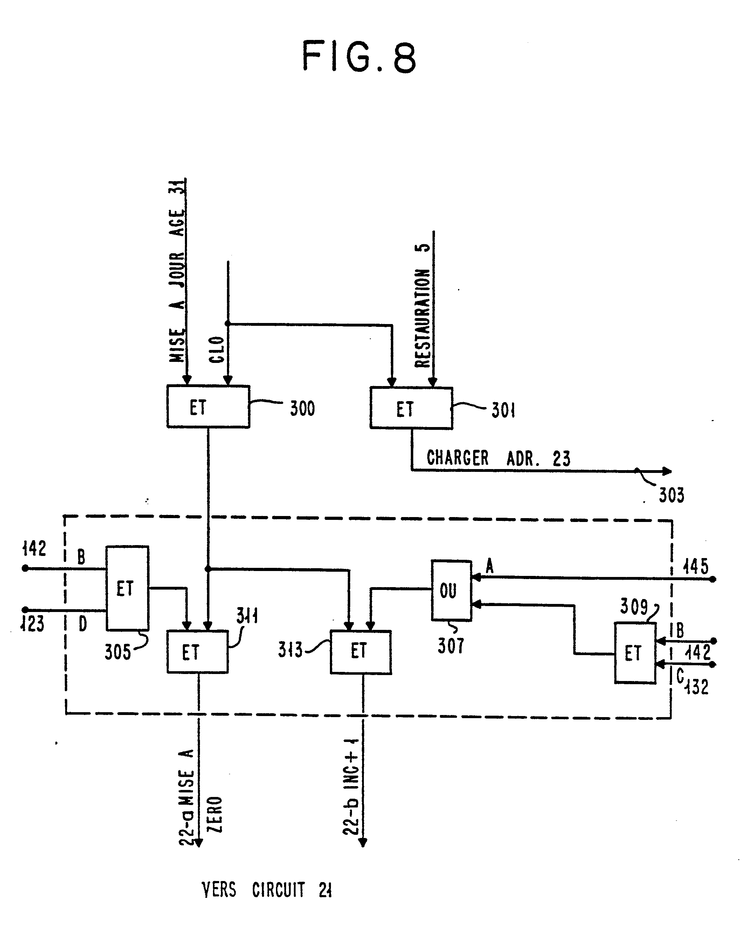

On va maintenant décrire le circuit de mise à jour de l'âge, en référence à la figure 8.

Le circuit comprend deux portes ET 300 et 301. La première porte 300 a deux entrées, l'une reçoit le signal CL0 et l'autre est connectée à la ligne 31 MISE A JOUR AGE qui est à un niveau haut lorsque le bus a été trouvé libre et que l'âge de chacun des circuits d'arbitrage doit être mis à jour conformément à l'algorithme de mise à jour :

Age unité sélectionnée $\Rightarrow$ 0
Age X des unités d'âge < Age unité sélectionnée $\Rightarrow$ X + 1
Age Y des unités d'âge > Age unité sélectionnée $\Rightarrow$ Y

Cette mise à jour est faite par le circuit logique 303.

La seconde porte ET 301 reçoit sur une entrée le signal CL0 et sur l'autre entrée le signal de RESTAURATION du fil 5 pour générer, à la restauration du système, un signal de sortie au niveau haut sur la ligne 23 qui provoque le chargement de l'adresse physique dans le registre d'âge 20.

On dispose de quatre informations de comparaison fournies par les bascules 123, 126 (fig. 6C) et 136, 145 (fig. 6D).

Si on appelle $A = (G_B > G_U)$, $A = 1$ si $G_B > G_U$, est fourni par la bascule 139 sur la sortie 145. $B = (G_B = G_U)$, $B = 1$ si $G_B = G_U$ est fourni par la bascule 136 sur la sortie 142.

$G_B < G_U$ n'est pas fourni par les circuits de comparaison 43, 50 mais est égal à $\bar{A}$. $\bar{B} = \overline{A+B}$.

$C = R_B > R_U$, $C = 1$ si $R_B > R_U$ est fourni par la bascule 126 sur la sortie 132.

$D = (R_B = Ru)$, $D = 1$ si $R_B = R_U$ est fourni par la bascule 123 sur la sortie 129.

$R_B < R_U$ n'est pas fourni par les circuits de comparaison 43, 50 mais égal à $\bar{C}$. $\bar{D} = \overline{C+D}$.

Le circuit 303 doit fournir deux signaux incrémentation + 1 et mise à zéro tels que : INC. + 1 = A + BC.

Mise à zéro = BD. Le circuit 303 comprend un premier circuit ET 305 qui effectue la fonction BD. Le circuit OU 307 et le circuit ET 309 effectuent la fonction A + BC.

Deux portes ET 322 et 313 sont ouvertes par le signal de sortie de la porte ET 300 pour provoquer la mise à jour de l'âge au temps CL0 et laisser passer sur la sortie MISE A ZERO le résultat de l'opération BD fourni par le circuit ET 305 et sur la sortie INC + 1 le résultat de l'opération A + BC.

Ces deux sorties sont appliquées au registre d'âge par la ligne 22.

## Revendications

1. Dispositif d'arbitrage destiné à un système de traitement de données, dans lequel N unités partagent une ressource commune pour attribuer la ressource à une unité sélectionnée, du type comprenant un circuit d'arbitrage associé à chaque unité, recevant de l'unité associée sa demande d'accès à la ressource commune ainsi que l'adresse physique de l'unité, chaque demande ayant un âge qui permet de déterminer quelle demande doit être sélectionnée, et recevant de la ressource un signal indiquant si la ressource est occupée ou non, caractérisé en ce que :

le circuit d'arbitrage est connecté à l'unité par un bus d'adresses (10-i) pour recevoir de l'unité les bits de l'adresse physique de ladite unité, cette adresse déterminant l'âge initial de la demande de l'unité qui est codé avec une valeur de groupe parmi p valeurs de groupe et pour chaque valeur de groupe avec une valeur de rang parmi q valeurs de rang avec p × q ⩾ N, l'âge de valeurs p = 0 et q = 0 correspondant à la demande la plus récente, p et q étant codés suivant un code binaire type 1 parmi n, et comprend des moyens (21) pour mettre à jour la valeur de l'âge de chaque unité lorsqu'une demande a été sélectionnée et que la ressource est libre, l'âge de l'unité sélectionnée prenant une valeur qui correspond à celle de la demande la plus récente, les âges des unités non sélectionnées qui correspondent à des demandes plus récentes que celles de l'unité sélectionnée étant augmentés d'une même quantité, les âges des unités non sélectionnées qui correspondent à des demandes plus anciennes que celui de l'unité sélectionnée restant inchangés,

le dispositif d'arbitrage comprend des moyens d'arbitrage (2 à 5) connectés à tous les circuits d'arbitrage recevant de tous les circuits d'arbitrage les valeurs de groupe et de rang de l'âge des demandes pour déterminer à chaque cycle d'arbitrage la demande la plus ancienne parmi toutes les demandes faites par les unités, qui sera la demande sélectionnée pour être servie au cycle suivant si la ressource n'est pas occupée.

2. Dispositif selon la revendication 1 caractérisé en ce que les moyens d'arbitrage comprennent :

un bus d'arbitrage sur lequel sont attachés les circuits d'arbitrage le bus comportant une pluralité de fils (2) chaque fil amenant au circuit d'arbitrage une impulsion d'horloge (CL0-CL3) par cycle d'arbitrage, pour contrôler la séquence des opérations d'arbitrage ;

une pluralité de fils d'arbitrage (3) chaque fil pouvant recevoir des circuits d'arbitrage un bit de l'âge, et faisant la somme des bits d'âge de même poids pour déterminer l'âge le plus élevé,

un fil (4) pour appliquer à chaque circuit d'arbitrage un signal indiquant que la ressource commune est libre ou occupée, et un fil (5) pour appliquer à chaque circuit d'arbitrage un signal de restauration provoquant le chargement de la valeur d'âge initiale avec les bits de l'adresse physique.

3. Dispositif selon la revendication 2, caractérisé en ce que les circuits d'arbitrage comprennent :

un registre d'âge (20) recevant sous contrôle du signal de restauration les bits de l'adresse physique,

des premiers moyens de sélection (33) pour appliquer aux fils du bus d'arbitrage (AL3-AL6) les bits de groupe en un premier temps du cycle défini par une première impulsion d'horloge (CL0) afin de déterminer les demandes ayant la valeur de groupe la plus élevée,

des seconds moyens de sélection (32) pour appliquer aux fils du bus d'arbitrage (AL0-AL2) les bits de rang en un second temps du cycle défini par une seconde impulsion d'horloge (CL1), pour les demandes ayant la valeur de groupe la plus élevée pour déterminer la demande ayant la valeur de l'âge la plus élevée,

des premiers moyens de comparaison (50) qui comparent la valeur du groupe sur les fils d'arbitrage et la valeur du groupe contenu dans le registre d'âge pour contrôler l'application par les seconds moyens de sélection des bits de rang aux fils (AL0-AL2) du bus d'arbitrage,

des seconds moyens de comparaison (43) qui comparent la valeur du rang sur les fils d'arbitrage et la valeur du rang contenu dans le registre d'âge,

des moyens (224, 208, 230, 238, 234) pour générer lorsque l'égalité des valeurs de rang est détectée et que la ressource commune est trouvée libre, le signal de demande accordée,

et en ce que, les moyens de mise à jour de l'âge sont sensibles aux indications fournies par les moyens de comparaison pour incrémenter de 1, mettre à zéro ou laisser inchangés le contenu du registre d'âge.

4. Dispositif selon l'une quelconque des revendications 1 ou 3 caractérisé en ce que les demandes peuvent être affectées d'un niveau de priorité, la sélection ne se faisant au cours de chaque cycle que parmi les demandes ayant le niveau de priorité le plus élevé, la demande sélectionnée parmi ces demandes étant celle ayant les valeurs de groupe et de rang correspondant à la demande la plus ancienne.

5. Dispositif selon la revendication 4 caractérisé en ce que, chaque circuit d'arbitrage est connecté à l'unité associée par un bus de priorité (7-i) sur lequel l'unité envoie les bits du niveau de priorité de la demande d'accès à la ressource commune, les bits de priorité étant appliquées aux fils du bus d'arbitrage (AL0-AL3) par les seconds moyens de sélection en un troisième temps (CL3) du cycle d'arbitrage, par les circuits d'arbitrage dont le signal sur la ligne de demande indique qu'une demande d'accès est faite à la ressource commune, afin de déterminer le niveau de priorité le plus élevé qui est comparé dans chaque circuit d'arbitrage par les seconds moyens de comparaison avec le niveau de priorité de la demande, la détection d'une égalité provoquant l'application aux fils du bus d'arbitrage (AL3-AL6) des bits de groupe au premier temps du cycle suivant.

6. Dispositif selon la revendication 5 caractérisé en ce que chaque circuit d'arbitrage comprend un moyen de vérification (205, 224, 225, 232) qui provoque pendant un quatrième temps du cycle (CL2) l'application des bits d'adresse par les premiers moyens de sélection des circuits d'arbitrage qui ont eu une demande sélectionnée aux fils du bus d'arbitrage (AL3-AL6), les bits résultant sur lesdits fils du bus d'arbitrage étant comparés dans chaque circuit d'arbitrage par les premiers moyens de comparaison avec les bits d'adresse de l'unité associée, pour générer dans le cas où une inégalité est détectée un signal d'erreur sur une ligne d'erreur (9-i) et inhiber la génération du signal de demande accordée sur la ligne de demande accordée.

## Claims

1. An arbitration device for a data processing system wherein N units share a common resource, for allocating said resource to a selected unit, of the type comprising an arbitration circuit associated with each unit and receiving therefrom a request for accessing the shared resource together with the physical address of the unit, each request having an age value used for determining which request is to be selected, said arbitration circuit receiving from said resource a signal indicating whether or not it is busy, characterized in that :

the arbitration circuit is connected to the unit via an address bus (10-i) to receive from the unit the bits of the physical address thereof, said address determining the initial age of the request made by the unit, which age is encoded in the form of a group value selected from p group values and, for each group value, in the form of a rank value selected from q rank values, with $p \times q \geqslant N$, with the age defined by values $p = 0$ and $q = 0$ corresponding to the most recent request, p and q being encoded by means of a binary code such as the « 1 out of n » code, and includes means (21) for updating the age value of each unit when a request has been selected and the resource is available, with the age of the selected unit assuming a value corresponding to that of the most recent request, the ages of units not selected that correspond to requests more recent than the one made by the selected unit being increased by the same quantity, and the ages of units not selected that correspond to requests older than the one made by the selected unit remaining unchanged,

the arbitration device includes arbitration means (2-5) connected to all arbitration circuits and receiving therefrom the group and rank values used to encode the ages of the requests, for determining during each arbitration cycle whith of all requests made by the units is the oldest, so that said oldest request may be selected to be services during the next cycle if the resource is available.

2. The device of claim 1, characterized in that the arbitration means includes :

an arbitration bus to which the arbitration circuits are connected, said bus comprising a plurality of conductors (2) each of which provides the arbitration circuit with a clock pulse (CL0-CL3) per arbitration cycle, for controlling the sequence of arbitration operations,

a plurality of arbitration conductors (3), each of which can receive from the arbitration circuits one of the bits of the age value, and adds up all age value bits that have the same weight in order to determine the highest age value,

a conductor (4) for applying to each arbitration circuit a signal indicating whether or not the shared resource is available, and a conductor (5) for applying to each arbitration circuit a reset signal causing the initial age value to be loaded with the physical address bits.

3. The device of claim 2, characterized in that the arbitration circuits include :

an age register (20) receiving the physical address bits under the control of the reset signal,

first selection means (33) for applying to the arbitration bus conductors (AL3-AL6) the group value bits during a first part of the cycle defined by a first clock pulse (CL0) to determine those requests which have the highest group value,

second selection means (32) for applying to the arbitration bus conductors (AL0-AL2) the rank value bits during a second part of the cycle defined by a second clock pulse (CL1), for those requests which have the highest group value to determine the request having the highest age value,

first comparison means (50) for comparing the group value on the arbitration conductors with the group value in the age register to control the application by the second selection means of the rank value bits to the arbitration bus conductors (AL0-AL2),

second comparison means (43) for comparing the rank value on the arbitration conductors with the rank value in the age register,

means (224, 208, 230, 238, 234) for generating, if equal rank values are detected and the resource is found to be available, the request granted signal,

and in that the age updating means is responsive to the indications provided by the comparison means to increment by 1, to reset to zero or to leave unchanged the contents of the age register.

4. The device of any one of claims 1 to 3, characterized in that a priority level may be assigned to the requests, only those requests which have the highest priority level being eligible for selection during each cycle, with the selected request being the one whose group and rank values correspond to the oldest request.

5. The device of claim 4, characterized in that each arbitration circuit is connected to the associated unit via a priority bus (7-i) over which the unit sends the bits of the priority level assigned to the request for access to the shared resource, the priority bits being applied to the arbitration bus conductors (AL0-AL3) by the second selection means during a third part (CL3) of the arbitration cycle, in the arbitration circuits whose signal on the request line indicates that a request for access to the shared resource has been made, to determine the highest priority level which is compared, in each arbitration circuit, by the second comparison means with the priority level of the request, the detection of an equality causing the group value bits to be applied to the arbitration bus conductors (AL3-AL6) during the first part of the next cycle.

6. The device of claim 5, characterized in that each each arbitration circuit includes checking means (205, 224, 225, 232) which causes, during a fourth part (CL2) of the cycle, the address bits to be applied to the arbitration bus conductors (AL3-AL6) by the first selection means of those arbitration circuits whose requests have been selected, the resultant bits on said arbitration bus conductors being compared, in each arbitration circuit, by the first comparison means with the address bits for the associated unit, to generate, if an inequality is detected, an error signal on an error line (9-i) and to inhibit the generation of the request granted signal on the request granted line.

**Patentansprüche**

1. Entscheidungsvorrichtung für ein Datenverarbeitungssystem, in dem N Einheiten sich in ein gemeinsames Mittel teilen, um das Mittel einer ausgewählten Einheit zuzuweisen, vom Typ mit einer jeder Einheit zugeordneten Entscheidungsschaltung, die von der zugeordneten Einheit ihren Zugriffsantrag zum gemeinsamen Mittel erhält, sowie die physische Adresse der Einheit, und jede Anforderung ein Alter besitzt, nach der sich ermitteln lässt, welche Anfrage auszuwählen it, und die vom Mittel ein Signal erhält, das angibt, ob das Mittel belegt ist oder nicht, dadurch gekennzeichnet, dass :

die Entscheidungsschaltung an die Einheit mit einem Adressbus (10-i) angeschlossen ist, um von der Einheit die physischen Adress-Bits der besagten Einheit zu empfangen, wobei diese Adresse das Anfangsalter der Beantragung der Einheit bestimmt, welche mit einem Gruppenwert unter p Gruppenwerten kodiert ist, und für jeden Gruppenwert mit einem Rangwert unter q Rangwerten mit $p \times q = \geqslant N$, und das Alter der Werte $p = 0$ und $q = 0$ dem letzten Antrag entspricht, während p und q nach einem binären Kode vom Typ 1 unter n kodiert sind, und die Mittel (21) enthält, um den Alterswert jeder Einheit zu berichtigen, wenn eine Anfrage ausgewählt wurde und das Mittel frei ist, sodass das Alter der ausgewählten Einheit einen Wert annimmt, der dem des neuesten Antrags entspricht, und die Alter der nicht ausgewählten Einheiten, die neueren Anfragen entsprechen als denen der ausgewählten Einheit, um eine gleiche Menge beaufschlagt werden, und das Alter der nicht ausgewählten Einheit, das älteren Anfragen als der der ausgewählten Einheit entspricht, unverändert bleibt.

Die Entscheidungsvorrichtung umfasst Entscheidungsmittel (2 bis 5), die an alle Entscheidungsschaltungen angeschlossen sind, welche von allen Entscheidungsschaltungen die Gruppen- und Rangwerte des Alters der Anträge erhalten, um in jedem Entscheidungszyklus den ältesten Antrag unter allen von den Einheiten gemachten Anträgen zu bestimmen der ausgewählt wird, um im nächsten Zyklus bedient zu werden, wenn das Mittel nicht belegt ist.

2. Vorrichtung gemäss Anspruch 1, dadurch gekennzeichnet, dass die Entscheidungsmittel enthalten :

einen Entscheidungsbus, an dem die Busentscheidungsschaltungen angeschlossen sind, welche mehrere Leiter (2) enthalten, von denen jeder der Entscheidungsschaltung einen Taktimpuls (CL0-CL3) pro Entscheidungszyklus zuführt, um die Sequenz der Entscheidungsvorgänge zu überwachen ;

eine Mehrzahl Entscheidungsleiter (3), von denen jeder von den Entscheidungsschaltungen ein Altersbit aufnehmen kann und die Summe der Altersbits gleichen Gewichtes bildet, um das höchste Alter zu ermitteln,

einen Leiter (4), um an jede Entscheidungsschaltung ein Signal anzulegen, das angibt, ob das gemeinsame Mittel frei oder belegt ist, und einen Leiter (5), um an jede Entscheidungsschaltung ein Wiederherstellungssignal anzulegen, das das Laden des ursprünglichen Alterswertes mit den Bits der physischen Adresse bewirkt.

3. Vorrichtung gemäss Anspruch 2, dadurch gekennzeichnet, dass die Entscheidungsschaltungen enthalten :

ein Altersregister (20), das unter Kontrolle des Wiederherstellungssignals die Bits der physischen Adresse empfängt,

erste Auswahlmittel (33), um an die Drähte des Entscheidungsbus (AL3-AL6) die Gruppenbits in einem ersten Abschnittszyklus anzulegen, der durch einen ersten Taktimpuls (CL0) definiert ist, um die Anträge zu ermitteln, die den höchsten Gruppenwert besitzen,

zweite Auswahlmittel (32), um an die Leiter des Entscheidungsbus (AL0-AL2) die Rangbits in einem zweiten Abschnitt des durch einen zweiten Taktimpuls (CL1) definierten Zyklus anzulegen, für die Anträge mit dem höchsten Gruppenwert, um den Antrag zu ermitteln, der den höchsten Alterswert besitzt,

erste Vergleichsmittel (50), die den Gruppenwert an den Entscheidungsparametern und den Gruppenwert im Altersregister vergleichen, um das Anlegen durch die zweiten Auswahlmittel der Rangbits an den Leitern (AL0-AL2) des Entscheidungsbusses zu steuern,

zweite Vergleichsmittel (43), die den Rangwert an den Entscheidungsleitern und den im Altersregister enthaltenen Rangwert vergleichen,

Mittel (224, 208, 320, 234), um das Signal « Antrag bewilligt » zu erzeugen, wenn eine Gleichheit der Rangwerte detektiert ist und das gemeinsame Mittel frei angetroffen wird,

und dadurch, dass die Mittel für die Fortzählung des Alters auf die Angaben ansprechen, die von den Vergleichsmitteln geliefert werden, um den Inhalt des Altersregisters um 1 zu beaufschlagen, auf Null zurückzustellen oder unverändert zu lassen.

4. Vorrichtung gemäss einem der Ansprüche 1 oder 3, dadurch gekennzeichnet, dass die Anträge mit einem Vorrangniveau versehen werden können, wobei die Auswahl im Lauf eines jeden Zyklus nur unter den Anträgen vorgenommen wird, die das höchste Prioritätsniveau besitzen, und der Antrag, der unter diesen Anträgen ausgewählt wird, der ist, der ist, der die Gruppen- und Rangwerte besitzt, welche dem ältesten Antrag entsprechen.

5. Vorrichtung gemäss Anspruch 4, dadurch gekennzeichnet, dass jede Entscheidungsschaltung an die mit einem Prioritätsbus (7-i) zugeordnete Einheit angeschlossen ist, an dem die Einheit die Bits des Prioritätsniveaus des Zugriffsantrags zum gemeinsamen Mittel sendet, wobei die Prioritätsbits an die Leiter des Entscheidungsbus (AL0-AL3) durch die zweiten Auswahlmittel in einem dritten Abschnitt (CL3) des Entscheidungszyklus angelegt werden, von den Entscheidungsschaltungen, deren Signal an der Antragsleitung angibt, dass der Antrag auf Zugriff zum gemeinsamen Mittel gestellt wurde, um das höchste Prioritätsniveau zu ermitteln, das in jeder Entscheidungsschaltung von den zweiten Vergleichsmitteln mit dem Prioritätsniveau des Antrags verglichen wird, wobei die Detektion einer Gleichheit das Anlegen der Gruppenbits im ersten Takt des nächsten Zyklus an die Leiter des Entscheidungsbus (AL3-AL6) bewirkt.

6. Vorrichtung gemäss Anspruch 5, dadurch gekennzeichnet, dass jede Entscheidungsschaltung umfasst ein Prüfmittel (205, 224, 225, 232), das in einem vierten Zyklusabschnitt (CL2) das Anlegen von Adressenbits durch die ersten Auswahlmittel der Entscheidungsschaltungen bewirkt, die einen ausgewählten Antrag an den Leitern des Entscheidungsbus (AL3-AL6) haben, wobei die Bits, die sich an den besagten Leitern des Entscheidungsbus ergeben, in einer ersten Entscheidungsschaltung durch die ersten Vergleichsmittel mit den Adressbits der zugeordneten Einheit verglichen werden, um ein Fehlersignal auf eine Fehlerleitung (9-i) zu geben, falls eine Ungleichheit detektiert wird, und die Erzeugung des Signals « Antrag bewilligt » auf der Antragsbewilligungsleitung zu sperren.

# FIG.1

SELECTION

**ETAPE I**

METTRE A JOUR AGE :

AGE UNITÉ SELECTIONNÉE ⟶ 0

AGE X DES UNITÉS D'AGE < AGE UNITÉ SELECTIONNEE ⟶ X + 1

AGE Y DES UNITES D'AGE > AGE UNITE SELECTIONNEE ⟶ Y

**ETAPE II**

SELECTIONNER DEMANDES AYANT LE NIVEAU DE PRIORITE LE PLUS ELEVE

**ETAPE III**

SELECTIONNER DEMANDE D'AGE LE PLUS ELEVE PARMI LES DEMANDES DE NIVEAU DE PRIORITE LE PLUS ELEVE

**ETAPE IV**

BUS LIBERE

NON

OUI

# FIG. 2

BUS D'ARBITRAGE 2

BUS 1

ARBITRAGE A-0
2-0
3-0
4-0
5-0
6-0
7-0
8-0
9-0
10-0
UNITE u-0

ARBITRAGE A-2
2-i
3-i
4-i
5-i
6-i DEMANDE
7-i NIV. PRIO
8-i DEM. ACC.
9-i ERREUR
10-i ADDRESSE
UNITE u-i

ARBITRAGE A-N-1
2-N-1
3-N-1
4-N-1
5-N-1
6-N-1
6-N-1
8-N-1
9-N-1
10-N-1
UNITE u-N-1

2 HORLOGE – CL0 A CL3
3 ARBITRAGE – AL0 A AL6
4 BUS 1 OCC.
5 RESTAURATION

# FIG. 3

CL0
CL1
CL2
CL3

T0    T1    T2    T3    T0

AL00–AL02    PRIORITE    RANG    PRIORITE

AL03–AL06    GROUPE    ADRESSE

T0    T1    T2    T3    T0

CYCLE BUS

2

FIG. 4

0 121 030

FIG.5A

RESTAURATION
CHARGER AGE — 60

ATTENTE CL0 — 61

BUS ATTRIBUE ⟶ 0
ADRESSE SUPPRIMEE — 62
MISE A JOUR AGE

63
TEST
DEMANDE — NON

OUi

64
COMPARAISON
PRIORITE — <

67
METTRE BITS GROUPE
SUR AL3—AL6

=

65
RESTAURATION
BASCULE DEMANDE

66
ATTENTE CL1

68 — VERS FIG.5B.

4

# FIG. 5B

68 DE FIG.5A

SUPPRIMER PRIORITE — 70

TEST DEMANDE 74 → NON

OUI

COMPARAISON GROUPE 74

< 

COMPARAISON GROUPE 72

75 RESTAURER BASCULE DEMANDE

76 METTRE RANG SUR FILS ALO— AL2

73 ATTENTE CL2

77 VERS FIG.5C

5

# FIG.5C

```
                    ↓ 77
                    DE FIG.5B

        ┌─────────────────────┐
        │  SUPPRIMER  GROUPE   │ ⌒ 80
        └─────────────────────┘
                    ↓
                  81
                ╱────╲
              ╱  TEST  ╲         NON
            ╱  DEMANDE   ╲ ──────────────────┐
             ╲          ╱                     │
               ╲      ╱                       │
                 ╲  ╱                         │
                  ↓ OUI                       │
                 84                           │
               ╱────╲                    ┌─────────────┐
      <     ╱  COMPARAISON ╲             │ COMPARAISON │ ⌒ 82
    ┌───── ╲    RANG      ╱              │    RANG     │
    │        ╲          ╱                └─────────────┘
    │          ╲      ╱                         │
    │            ╲  ╱                           │
    │             ↓  =                          │
    │ 85                  86                     │ 83
┌──────────────┐  ┌────────────────────┐        │
│.RESTAURATION │  │.METTRE  ADRESSE SUR │        │
│  BASCULE     │  │      AL3-AL6        │        │
│  DEMANDE     │  │• BUS  ATTRIBUE → 1  │        │
└──────────────┘  └────────────────────┘        │
      │                   │                      │
      ↓                   ↓                      ↓
┌───────────────────────────────────────────────────┐
│               ATTENTE CL3                          │
└───────────────────────────────────────────────────┘
                    ↓ 87
                    VERS FIG. 5D
```

**0 121 030**

# FIG. 5D

_87_

DE  FIG. 5C

**STOCKER INFO  BUS  OCCUPE
STOCKER  ETAT  DEMANDE
SUPPRIMER  RANG** _90_

**TEST
BUS
ATTRIBUE** _91_ — **NON** →

**TEST
DEMANDE** _92_

→ **NON**

**OUI** ↓

**·RESTAURER  BASCULE  DEMANDE** _94_

**OUI** ↓

**METTRE  PRIORITE
SUR  AL0—AL2** _93_

**COMPARAISON
ADRESSE** _95_ — **<**

_96_ **ERREUR→↓
DEMANDE
BUS  SUPPR.**

**=** ↓

**TEST
BUS
OCCUPE** _97_ — **OUI**

**NON** ↓

**RESTAURATION  DEMANDE  BUS
ENVOYER  DEMANDE  ACCORDEE** _98_

_64_ **ATTENTE  CL0  (FIG. 5A)**

7

**FIG. 6A**

ET 100 / ET 102 / ET 103
OU 104
SEL PR 35 — PR 7-1
SEL RG 34
SEL RGI 36
32
40
42

**FIG.6B**

ET 105 / ET 107 / ET 108
OU 109
SEL AD 38 — AD 26
SEL GR 39 — GR 29
SEL GRI 37
33
47
49

**FIG.6C**

COMP 1
PR OU RG — 44
AL0–AL2
= 120
< 121
43
122 D C — 128 PR =
123 D C — 129 RG =
CL0
CL2
125 D C — 131 PR <
126 D C — 132 RG <
46 C1 VERS 30 ET 24

**FIG.6D**

COMP 2
GR OU AD — 51
AL3–AL6
= 134
< 135
50
136 D C — 142 GR =
137 D C — 143 AD =
CL1
CL3
139 D C — 145 GR <
140 D C — 146 AD <
53 C2 VERS 30 ET 21

8

FIG.7

# FIG.8

VERS CIRCUIT 24